# EUROPEAN PATENT APPLICATION

(11) **EP 0 576 739 A1**
(43) Date of publication of application: **05.01.1994**
(21) Application number: 92203441.8
(22) Date of filing: 10.11.1992
(51) Int. Cl.: B23K 11/31

(54) **Welding gun**

(30) Priority: 01.07.1992 IT TO920550
(71) Applicant: GERBI MARIO S.r.l. Fonderia e Lavorazione Metalli, I-10137 Turin (IT)
(72) Inventor: Gerbi, Massimo, I-10145 Turin (IT)
(74) Representative: Robba, Eugenio

(57) **Abstract**

The arms (9) of a welding gun (2), particularly fitted for welding "robots", are made of a carbon fiber composite material and allow for an appreciable reduction of the weight (about 50% with respect to the aluminum alloy arms and about 20-25% with respect to the titanium alloy arms), an improved handling as well as a length of the arms (9) that cannot be obtained otherwise, which is due to the characteristics of the material forming the arms.

Further the improved stiffness of the used material allows for building arms (9) that are quite long and slender, with a box-type cross section, so that the feeding electric conductors (11) and the cooling ducts (13) for the welding heads can be incorporated within the arms.

## Description

The present invention relates to a welding gun for an electric welding machine.

As it is well known spot welding machines are used by everyone for assembling component parts of the bodywork of motor vehicles, as well as of the outer housing of household appliances and the like.

According to such process the metals plates are strongly pressed together at the area to be welded by means of a special tool known as "welding gun" made up by a pair of electrode holder arms and two electrodes.

A large electric current is caused to circulate through the electrodes and the plates at the spot to be welded; due to the plate resistance the temperature of the area between the electrodes is raised to very high values.

Due to the strong compression exerted by the arms of the "gun", the metal plates are perfectly welded together at the spot of the current flow.

It is clear that for a proper working the arms of the "gun" must possess a number of properties, such as:
- high mechanical strength for withstanding the repeated stresses of gripping the metal plates and precisely transmitting the forces to the desired spot;
- capability of being formed with any desired shape so that the welding gun can reach all the areas of the item to be welded, also those internal portions that are difficult to be reached;
- capability of properly protecting the electric cables and the ducts or pipes carrying the cooling water which are fastened to the arms of the "welding gun";
- a reduced weight for allowing an improved handling (controllability).

It is further known that such "welding gun" is presently made of suitable materials such as aluminum alloys and copper alloys in view of their well known physical properties.

Recentely however the car industry and the household appliances industry have been increasingly using the so called "robots" for the spot welding operations and this led to a request for welding guns with additional and highly improved features of easy handling and low weight.

The Applicant of the present patent application has already made an attempt proposing a solution wherein the arms of a welding gun are built from a titanium alloy which constitutes a great improvement with respect to the conventional materials such as the aluminium alloys and the like used before.

The above improvement was the object of Italian patent application No. 67 966-A/88 filed on October 26th, l988 and entitled "An improved welding gun", for which Italian patent No. 1 233 869 was issued on September 26th, 1990.

Thanks to the above solution there were achieved considerable advantages and results that could not be obtained before.

Since the performances requested by the assembling robots are increasingly demanding, even the above mentioned arms of titanium alloy are presently at the limits of their performance, particularly for the use in automatic assembling.

The object of the present invention is that of overcoming the above mentioned limits thanks to a welding gun that satisfactorily meets the requirements of the today car manufacturing technique.

The above objects are achieved by the invention consisting of a welding gun for spot welding metal plates in automatic assembly plants, comprising a pair of electrode holder arms to which feeding electric conductors and cooling ducts for the welding head are fastened, characterised in that said arms are made of a carbon fiber composite material and are substantially hollow, with a box-type cross section housing said feeding electric conductors and cooling ducts within the arms without any outside protruding component

According to the invention the electrode holder arms of such welding gun are made of a carbon fiber composite material which allows for an appreciable reduction of the weight (about 50% with respect to the aluminum alloy arms and about 20-25% with respect to the titanium alloy arms), an improved handling as well as a definitely higher length/cross section ratio for a given cross section.

In an embodiment of the invention the arms made of a carbon fiber composite material are substantially hollow, with a box-type cross section, so that the feeding electric conductors and the cooling pipes for the welding heads can be incorporated within the arms without any outside protruding component.

More particularly according to an embodiment of the invention, the arms of the welding gun are made of members that are formed in advance from said a carbon fiber composite material, and the profiles of such arms are obtained by means of suitable sections or beams also formed from said materials.

According to a modification of the above mentioned embodiment the electrode holder arms of the welding gun are manufactured by assembling together members that are formed in advance from a carbon fiber composite material, with parts of titanium and/or aluminum that are made by casting, welding or mechanical machining.

The invention will be disclosed with greater details with particular reference to the attached drawings that are supplied as a non limiting example, and in which:
Fig. 1 is a perspective schematic view of the arms of a welding gun in accordance with the prior art technique;
Fig. 2 is a perspective schematic view of the arms of a welding gun in accordance with the present invention;
Fig. 3 is a cross section of an arm along the lines III-III in fig. 1;
Fig. 4 is a cross section of an arm along the lines IV-IV in Fig. 2.

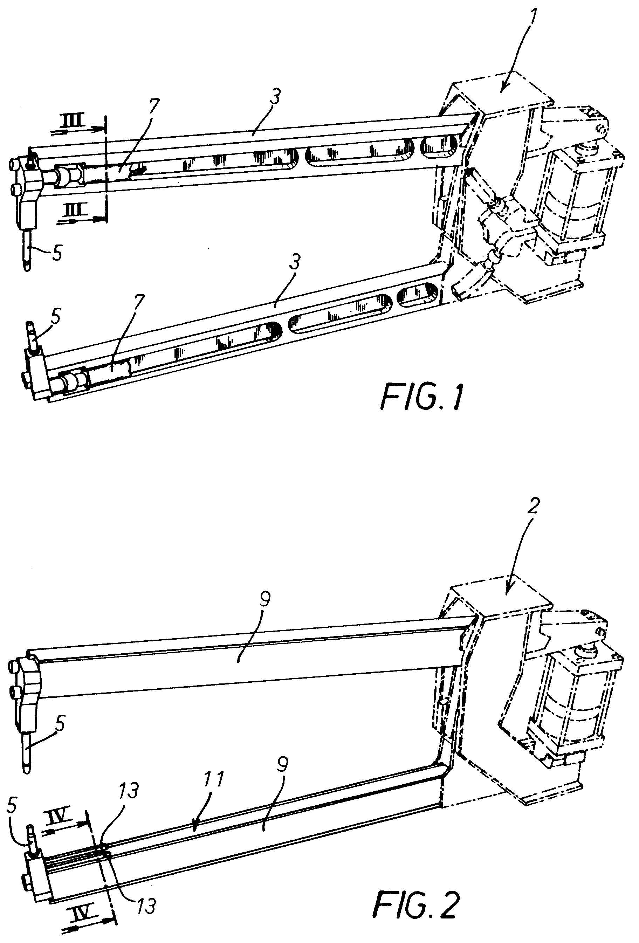

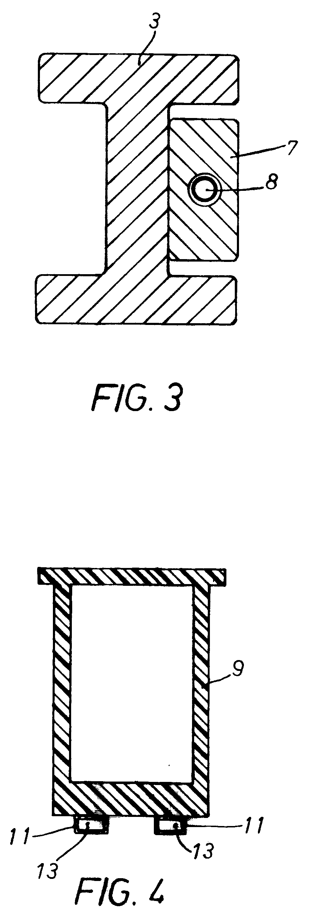

As shown in Figures 1 and 3, the arms of a welding gun according to the prior art, i. e. arms of an aluminum alloy or similar alloy have a cross section shaped like an "I" and in most cases are obtained by mechanically machining a solid beam.

In Fig. 1, numeral reference 1 is a welding gun, 3 the arms of such welding gun that carry the electrodes 5 at their ends.

This construction of the arm 3 with an I cross section as shown by Fig. 3 requires that both the electric conductors 7 and the cooling duct 8 are located outside the arm, the duct being formed in this case within such (solid) conductor 7.

It is easy to understand that the above arrangement has considerable drawbacks since the electric conductor or bar 7 can be touched or striken by the operators or by objects when being moved to the different operative areas of the welding gun, which can possibly damage both the operator and the conductor.

Figures 2 and 4 illustrate two arms made by using a carbon fiber composite material.

In addition to the already mentioned advantage of a definitely reduced weight of the welding gun 2 (the weight reduction is about 50%), it is evident that the box-type cross section of such arm is quite practical.

Such arms are marked with numeral reference 9 in Fig. 2, and in Fig. 4 the cross section of the arm 9 is shown with electric conductors 11 located within such cross section and with cooling ducts 13 provided within such conductors 11, said conductors 11 and said ducts 13 being located within the welding gun 2 and therefore not subject to the risk of being "touched" from anything in the surrounding environment.

From Fig. 4 it can be further seen that thanks to the use of a carbon fiber composite material, the arms 9 are substantially formed like a one-piece member that does not require welding or fastening means.

It is to be understood that the embodiments shown in the Figures are only illustrative of the possible constructions of the various members by using a carbon fiber composite material. Such materials allow for achieving industrial results that could not be otherwise achieved with the conventional materials used heretofore.

It is to be understood that the invention is not to be limited to the illustrated and described embodiment, and that several modifications and further improvements can be made to it without departing from the scope of the invention.

## Claims

1. A welding gun for spot welding metal plates in automatic assembly plants, comprising a pair of electrode holder arms (9) to which feeding electric conductors (11) and cooling ducts (13) for the welding heads are fastened, characterized in that said arms (9) are made of a carbon fiber composite material and are substantially hollow, with a box-type cross section housing said feeding electric conductors (11) and cooling ducts (13) within the arms without any outside protruding component.

2. A welding gun as claimed in claim 1, characterized in that said electrode holder arms (9) of said welding gun (2) are made of members that are formed in advance from a carbon fiber composite material, and in that the profiles of said arms (9) are obtained by means of suitable sections or beams also formed from a carbon fiber composite material and/or aluminum and/or titanium.

3. A welding gun as claimed in claim 2, characterized in that also other members of the welding gun (2) such as the arm supports and the like are made of a carbon fiber composite material.

4. A welding gun as claimed in claims 1 and 2, characterized in that the arms (9) of said welding gun (2) and the other members that too are made of a carbon fiber composite material and fixed to parts of aluminum and/or titanium alloys are obtained by casting, forging and/or mechanical machining and welding instead of being assembled from metal plates and profiles.
